# EUROPEAN PATENT APPLICATION

(11) **EP 4 279 361 A1**
(43) Date of publication of application: **22.11.2023**
(21) Application number: 22173851.1
(22) Date of filing: 17.05.2022
(51) Int. Cl.: B62D 15/02, G08G 1/0968, G08G 1/14, G06Q 30/02

(54) **PARK ASSIST METHOD FOR A VEHICLE HAVING PHOTOVOLTAICS AT A VEHICLE BODY**

(71) Applicant: Sono Motors GmbH, 80935 München (DE)
(72) Inventor: BAUDRIT, Mathieu, 80636 Munich (DE)
(74) Representative: Qip Patentanwälte Dr. Kuehn & Partner mbB

(57) **Abstract**

The invention relates to a park assistance for a vehicle having photovoltaics, PV, at a vehicle body. A method embodiment comprises accepting a park duration information representing a prospective park duration of the vehicle (102); determining, by a PV yield estimator, taking into account the accepted park duration information, a first PV yield estimate for a first park scenario and a second PV yield estimate for a second park scenario, wherein the first park scenario is based on an assumed first park position (132, 136), the second park scenario is based on an assumed second park position (134, 138), and wherein the first park position and the second park position differ from each other; and providing, based on a comparison of the determined first PV yield estimate and second PV yield estimate, a park position indication indicating at least one of the first park position and the second park position.

## Description

### FIELD OF THE INVENTION

The present disclosure relates to a park assist method for a vehicle, and in particular a park assist method for a vehicle having photovoltaics, PV, at a vehicle body. Further the present disclosure relates to a park assist component for a vehicle having PV at a vehicle body, a computer program product for implementing said method and a computer readable medium storing said computer program product.

### TECHNICAL BACKGROUND

Parking assistance for vehicles is known which may include an app providing indications of free parking places in an environment such as a parking lot to the driver. Parking assistance may even include autonomous parking where the assistant takes over control, e.g., at the entrance of the parking lot and navigates or drives the vehicle autonomously to a free place to park the vehicle.

Vehicles are known that have photovoltaics arranged therewith, specifically at a vehicle body. The photovoltaics may comprise solar cells for converting incident light into electrical energy, where the energy may be provided to a battery of the electrically powered car or vehicle.

Photovoltaic yield estimators calculate a photovoltaic yield or PV yield for PV arrangements, wherein such calculation is a prediction or an estimate of a yield per year or some other time span for example for a stationary arrangement such as a solar farm or an arrangement on a building. Such calculations may take into account an amount of sunlight incident on the arrangement in the given time span, a conversion efficiency of the solar cells, etc.

### SUMMARY OF THE INVENTION AND OF EMBODIMENTS

There is a need for improved parking assistance for vehicles, in particular vehicles having photovoltaics at the vehicle body.

Such need may be satisfied by the subject-matter of the independent claims. Advantageous embodiments are defined in the dependent claims and described in the following specification and illustrated in the accompanying figures.

According to a first aspect of the present disclosure, a park assist method for a vehicle having photovoltaics, PV, at a vehicle body is proposed. The method comprises accepting a park duration information representing a prospective park duration of the vehicle; determining, by a PV yield estimator, taking into account the accepted park duration information, a first PV yield estimate for a first park scenario and a second PV yield estimate for a second park scenario, wherein the first park scenario is based on an assumed first park position, the second park scenario is based on an assumed second park position, and wherein the first park position and the second park position differ from each other; and providing, based on a comparison of the determined first PV yield estimate and second PV yield estimate, a park position indication indicating at least one of the first park position and the second park position.

Accepting the park duration information may comprise accepting a passenger input of a passenger of the vehicle related to the prospective park duration. For example, a passenger such as a driver of the vehicle may indicate by voice or enter by typing an expected park duration. This may comprise presenting a duration proposal for the prospective park duration and accepting the passenger input in response to the presenting of the duration proposal. One example embodiment comprises acknowledging a proposal for the prospective park duration presented to the driver or passenger by a component of the vehicle such as a parking assistant, where such proposal may be based on historical parking durations. Said proposal may automatically be presented to the driver in response to a detection that the vehicle approaches a parking facility. The proposal may be presented to a device on-board the vehicle such as a display built-in into the vehicle and/or a personal device of the driver or passenger of the vehicle, such as a mobile device, smartphone, tablet, or other portable device having, e.g., an app installed which implements or includes a human-machine-interface, HMI, for communication between the parking assistant and the driver or passenger.

The PV yield estimator may be included in the parking assistant or may be provided as a stand-alone component or integrated within another separate control functioning such as a power, battery or energy control system of the vehicle. The PV yield estimator or portions thereof may also be accessed remotely from the vehicle and be accessed on demand such as when triggered by the park assistant.

According to embodiments, the PV yield estimator may be triggered to consider different park scenarios which may relate to different parking positions. According to embodiments, the first park position and the second park position may differ from each other in at least one of an orientation of the vehicle and a localization of the vehicle. For example, the first and second park scenarios may relate to one and the same parking place, but different orientations of the vehicle, such as the vehicle parked forward or reverse. According to another example the park positions may differ in localization, e.g., locations within a parking lot, and orientation, such as may be the case, e.g., in different areas of an extended parking lot.

According to various embodiments, the PV yield estimator may determine the first and second PV yield estimates based on a shape of the vehicle. For example, a bus or bus trailer may be assumed as a cuboid where roof and side walls may be covered with photovoltaics to a certain extent. More complex geometries may be assumed and may be represented by equations, tables, combinations thereof, etc.

According to embodiments, the PV yield estimator may determine the first and second PV yield estimates based on a performance of solar cell integration of the vehicle. Such performance may be related to a type or types of solar cells, their specific kind of integration or embedment into the vehicle body, etc.

The performance of solar cell integration may also be considered as dependent on the light, primarily sunlight, incident on or impinging thereon. According to some embodiments, the solar radiation may be considered dependent on a geographical location, e.g., latitude, of the vehicle or the park positions, the time of the year, the time of the day of the park duration, etc.

According to embodiments, a given performance of solar cell integration based on full sunlight may be considered less in conditions of weakened sunlight, such as for example in case of cloudy sky, overcast sky, fog, low stratus, general degree of atmospheric humidity, rain, snow, etc.

According to various embodiments, determining the first and second PV yield estimates may be based on weather data. Such weather data may be real-time weather data related to the location of the vehicle, such as weather data which may be measured by sensory equipment at the vehicle itself, for example, light sensors. According to embodiments, the photovoltaics at the vehicle or parts or portions thereof may serve for such sensing.

Additionally or alternatively, the weather data may comprise forecast weather data. According to embodiments, determining the first and second PV yield estimates may include accessing a weather forecast database. Such accessing may comprise the parking assistant, PV yield estimator, other component of the vehicle and/or a personal device, e.g., an app executing thereon, of a passenger of the vehicle accessing a remote database providing the weather forecast data.

According to various embodiments, determining the first and second PV yield estimates may include accepting imaging data from a camera associated with the vehicle, such as a dashcam, or associated with a passenger of the vehicle, such as a camera of a smartphone of the driver which may be placed in an according fixture in the vehicle and in communication with systems of the vehicle including the parking assistant. The imaging data may include, for example, one or more images of an environment of the vehicle, such as the parking lot, structures within or around or at the border of the parking place including trees, buildings, etc., but also other vehicles such as busses, lorries, etc. parking nearby the assumed park positions.

Accepting the imaging data may include calculating a horizon for parts or all of the parking lot, the different park positions, etc., wherein the horizon may be calculated insofar as being relevant for the amount of light impinging on the PV integration of the vehicle, i.e., the horizon may be considered as leading to shadowing effects on the assumed parking positions, for example trees or high buildings obscuring the sun partly or fully for some time.

According to embodiments, a comparison of the determined first and second PV yield estimates may comprise establishing a ranking of the park positions according to their estimated PV yields. The ranking may take into account further data such as a walking distance for the passengers between the parked vehicle and points of service, entrance, and/or exit of the parking lot, etc.

Providing a park position according to the comparison or the ranking may comprise presenting one or more favorable park positions to the driver so as to let the driver decide on, e.g. a parking space which is nearby, comfortably to park in, etc. and with an optimized PV yield. Additionally or alternatively, the park position may be provided to an autonomous system which then autonomously parks the vehicle in the indicated position.

According to embodiments, the park position indication may comprise an indication of an orientation or orientation range of the vehicle, such as, for example, an indication of how to park relative to a celestial direction, an indication to park in a forward or rearward direction, etc. The park position indication may additionally or alternatively comprise an indication of a park position, which may include a direction of driving towards the park position, an indication of the park position and/or travel path thereto on a graphical user interface, GUI, such as on a map of a parking lot, or combinations thereof.

According to various embodiments, multiple parking spaces which are currently available for the vehicle may be determined, for example by an application or app integrated within or accessed by the parking assistant, where such app may also be present on a personal device of the driver or another passenger of the vehicle. The PV yield estimator may then determine the PV yield estimates for any of these multiple parking spaces and provide an according recommendation, i.e., the indicated park position may be one or more of the currently available park positions.

According to embodiments, at least one of a provisioning of a charging energy or a charging regime of energy from a charging station to the vehicle may be determined based on the first and/or second PV yield estimate. The charging regime may specify a charging of the vehicle by the charging station over all or a part or parts of the prospective parking duration, where the determination may take into account the PV yield estimated to be provided by the solar integration of the vehicle at the indicated park position.

According to embodiments, an energy demand indication is accepted, and energy is received from the charging station and/or provided to a consumer of energy based on the energy demand indication. The energy demand indication may indicate an energy demand of the vehicle after the prospective park duration, which may be input or acknowledged by the driver, determined by a system of the vehicle based on historical data, etc. According to embodiments, in case an energy available in a battery or batteries of the vehicle currently and/or during or at the end of the prospective park duration, based on the estimated PV yield at the assumed park position, exceeds the indicated energy demand, energy may be provided to another consumer or consumers, which may for example include feeding energy into a grid, and any such provision may be accomplished during portions or all of the prospective parking duration.

According to embodiments, the feeding or injection of energy into the grid may comprise controlling the injection according to one or more electricity tariffs. According to one embodiment, energy may be offered by the vehicle particularly at times when the prices are high.

Generally, embodiments of the methods proposed herein may be computer-implemented. For example, any one or more steps may be executed in a controller, processing unit such as a central processing unit, CPU, etc.

According to a further aspect of the present disclosure, a computer program product is proposed which comprises program code portions for at least one of performing and controlling one or more of the methods described herein when the computer program product is executed on one or more computing devices.

According to another aspect of the present disclosure, the computer program product may be stored on a computer readable medium, such as a permanent or re-writeable memory within or associated with a computing device, such as flash memory, ROM, PROM, EPROM, or a removable CD-ROM, DVD or USB-stick. Alternatively, the computer readable medium may be a stationary device such as another computer or server, such computer or server possibly being part of a data cloud, wherein the computer program may be provided for download from such computer or server, for example via a data network such as the Internet and/or a LAN or a communication line such as a telephone line or wireless link.

According to a still further aspect of the present disclosure, a module is proposed for a vehicle having photovoltaics, PV, at a vehicle body. The park assist module comprises a component configured for accepting a park duration information representing a prospective park duration of the vehicle; a PV yield estimator configured for determining, taking into account the accepted park duration information, a first PV yield estimate for a first park scenario and a second PV yield estimate for a second parking scenario, wherein the first park scenario is based on an assumed first park position, the second park scenario is based on an assumed second parking position, and wherein the first park position and the second park position differ from each other; and a component configured for providing, based on a comparison of the determined first PV yield estimate and second PV yield estimate, a park position indication indicating at least one of the first park position and the second park position.

The park assist module may be a stand-alone assistant or may be a module, component or part of a parking assistant of the vehicle which provides further passive and/or active parking or driving assistance. For example, the park assist component may be a component of a parking assistant which is enabled to autonomously park the vehicle at an indicated park position such as that provided by embodiments of the park assist component proposed herein.

It shall be noted that features and advantages of various embodiments are described herein partly with respect to a method and partly with respect to a component. One skilled in the art readily recognizes that a feature or features may be suitably transferred from one embodiment to other and features may be modified, adapted, combined and/or replaced, etc. in order to arrive at further embodiments.

### BRIEF DESCRIPTION OF THE DRAWINGS

Further exemplary embodiments will be described in detail with reference to the accompanying drawings:
- Fig. 1: schematically illustrates an exemplary park assist scenario for a vehicle according to embodiments of the present disclosure;
- Fig. 2: schematically illustrates an embodiment of a park assist module for the vehicle of Fig. 1;
- Fig. 3: is a flow diagram illustrating an operation of the park assist module of Fig. 2;
- Fig. 4A: schematically illustrates a first embodiment of a display output onto a smartphone of a passenger of the vehicle of Fig. 1.
- Fig. 4B: schematically illustrates a second embodiment of a display output onto a smartphone of a passenger of the vehicle of Fig. 1.

### DESCRIPTION OF PREFERRED EMBODIMENTS

Neither the drawings nor the description shall be interpreted as limiting the invention.

If not explicitly stated otherwise, the figures are schematic and not to scale. Reference signs in the claims should not be construed as limiting the scope of the claims. Same reference signs refer to same or similar features.

It should be noted that any of the terms "comprising" or "including" as used herein does not exclude other elements or steps. Use of "a" or "an" does not exclude a plurality.

Various elements described in association with different embodiments may nevertheless be combined.

The term "vehicle" as used herein may refer to one or more vehicles such as passenger cars, taxis, vans, busses, mobile homes or camping cars, but also freight vehicles or lorries, etc., and may include manned vehicles but also unmanned vehicles. Vehicles may even be considered trains such as trams, ships, or airplanes.

Vehicles as considered herein may be controlled, e.g., driven by humans, where the driver may be assisted by driving assistants and/or parking assistants. Other vehicles may be driven or controlled fully or in part autonomously, i.e. by an autonomous driving control system.

A driving assistance for a vehicle may include a parking assistance. Otherwise, parking assistance or park assist may be considered implemented as a standalone component.

Parking assistance may comprise passive assistance by providing distance measurements and distance warnings but may also include active assistance by active control of the steering wheel or full manoeuvre control. Parking assistance may even include autonomous parking where the assistant takes over control, e.g., at the entrance of a parking lot and navigates autonomously to a free place to park the vehicle.

It shall be noted that "parking" of a vehicle may include any kind of parking, placing, or stopping of the vehicle for some time span, i.e. the parking duration, which may include situations on a parking lot such as in any kind of parking area including a car park, bus park, parking areas for public vehicles such as garbage trucks or trams, or for a vehicle fleet of a company, but also a parking deck of a car park building such as being not or partly or fully covered by roof but with openings in or open side walls where sunlight can enter and impinge on parked vehicles.

However, parking situations partly or fully with artificial light impinging on a vehicle, such as in a building, a parking duration extending fully or partly in the night, etc. are not intended to be excluded in the present disclosure.

A parking situation may even include a "parking" before a red traffic light or a closed gate of a railway crossing, for example when the vehicle approaches such a halting situation and there are options for choosing one of different lanes.

A photovoltaic arrangement, sometimes herein referred to "photovoltaics" for short, may comprise only one solar cell, but may typically comprise a multiplicity of photovoltaic cells, wherein the or each photovoltaic cell is configured for converting incident or impinging light into electrical energy. One or more photovoltaic cells may be arranged in one or more photovoltaic panels. In the following, the term "photovoltaic/s" may be abbreviated by "PV". PV cells may also be referred to as solar cells.

Such photovoltaics may also be arranged at a vehicle, for example a vehicle body, wherein "arranged at" may include that the photovoltaics is arranged on, embedded within, and/or forms part of the vehicle body, e.g. the vehicle roof and/or side parts. However, photovoltaics may also be included in advertising roof signs for taxis, etc. Photovoltaics may also be arranged at a trailer of a motored vehicle, such as at bus trailers.

Such PV arrangements may also be referred to as PV integration or solar integration. For example, electrically driven vehicles including PV integration may be referred to as solar electric vehicle (SEV) or vehicle with solar integration. For example, a significant portion of an overall vehicle body may be covered with solar cells (or having those embedded).

The electrical energy generated by the photovoltaics may be used for supplying power to one or more consumers, for example at the vehicle itself, more specifically a motor or motors thereof, but also to consumers separate or remote from the parking vehicle, and the electrical energy may be provided via one or more power cables and/or to a grid or grids, such as a local grid at the parking facility connected to a public grid, power network, national grid, etc.

More specifically, electrical energy generated by the photovoltaics may be stored in one or more electrical storage components such as one or more batteries, battery packs, etc. onboard the vehicle, or outside of or remote from the vehicle, such as being fed from the vehicle via a grid to any kind of consumer, including electrically driven facilities and storage facilities, which may include electrical storage components but also other storage facilities such as a facility to produce green hydrogen, a gravitational storage component such as a pumped storage hydroelectricity, etc.

A photovoltaic yield or PV yield may generally be calculated or estimated for a given PV arrangement or solar cell arrangement, for example for a stationary arrangement such as a solar farm or an arrangement on a building or buildings. Such calculation may include the performance of the PV arrangement, which amongst others depends on the light impinging thereon, and this may also include the geographical latitude of the given location, specifics of the arrangement such as total area, inclination angles of all or parts of the arrangement, etc.

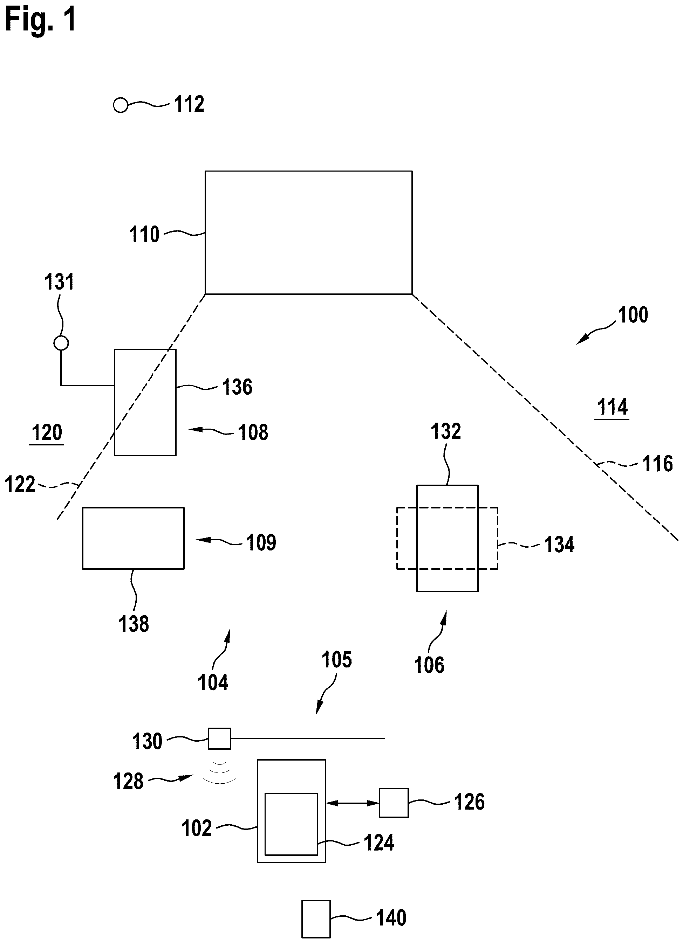

Fig. 1 schematically illustrates an exemplary parking scenario 100 with a vehicle 102 entering a parking lot 104 at an entrance 105 thereof. The lot 104 provides a plurality of parking places 106, 108, 109 for individual vehicles such as vehicle 102. The exemplary parking lot 104 is understood to be under open sky, i.e., the parking places 106, 108, 109 are outdoor parking places.

The scenario 100 further assumes an object 110 adjacent the parking lot 104, wherein the object 110 may be a house, but also a tree or group of trees, billboard, industrial facility, or any other object/s able to cast shadows onto at least portions of lot 104. At a specific given day time, and according sun or solar position 112, for example in the morning, a portion 114 of lot 104 is assumed to be shaded by object 110, as indicated by a hatched area limited by shadow line 116. For purposes of illustration, at another time, at a different solar position, e.g. in the evening, another portion 120 of the parking lot is shaded as indicated by shadow line 122.

Vehicle 102 is equipped with a photovoltaics, PV, arrangement 124 at its vehicle body. A park assist module 126 for assisted parking is associated with vehicle 102 such as, for example, the functionality of the module being offered via the Internet and the driver being a user thereof, e.g., being logged in as a customer. The park assist functionality may comprise recommending any of parking places 106, 108, 109 with the intention of optimizing a solar yield of the PV arrangement 124 during parking, where the according energy may be used for charging the vehicle 102, providing electrical energy to a consumer via a grid 131 and/or minimizing an amount of energy to be charged to the vehicle from the grid 131, if a charging station is available at one or more of the parking places 106, 108, 109.

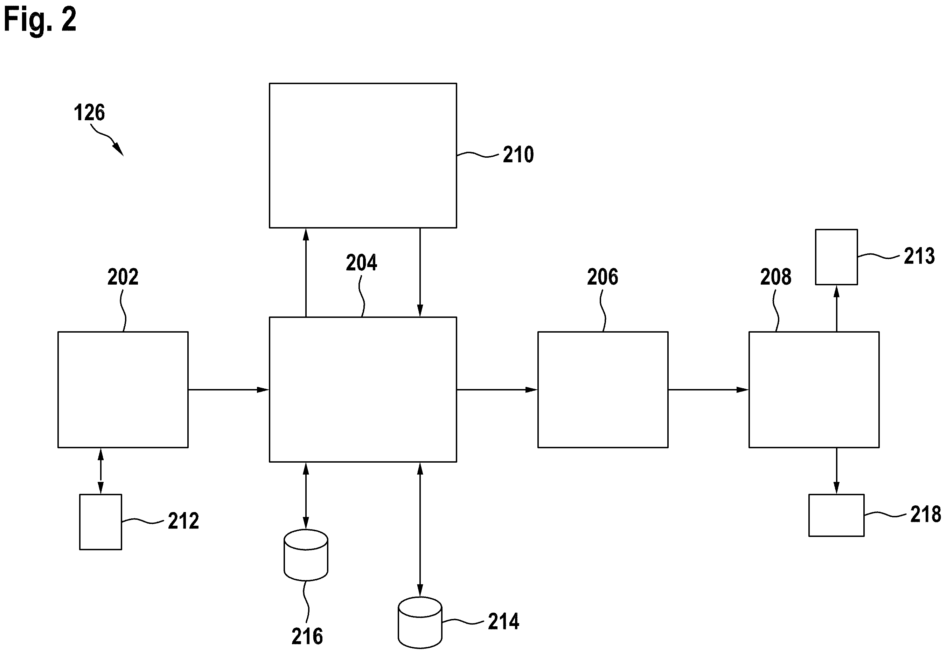

Fig. 2 is a functional block diagram which schematically illustrates in more detail the park assist module 126 of Fig. 1. According to the embodiment described here, the module 126 is a component of a driving and/or parking assistance which may be available via an app on a smartphone 140 of the driver or other passenger of vehicle 102. The app operates to access the functionality remotely, e.g., in a cloud. The assistance functionality and the app may be operated by a manufacturer of the vehicle, an operator of parking lot 104, a stand-alone provider of parking assistance, etc.

The park assist component 126 is illustrated in Fig. 2 as comprising an input or trigger component 202, a frontend component 204, a ranking component 206 and an output or presentation component 208. The trigger component 202 is illustrated as being configured to receive trigger information from a display 212 such as a display of vehicle 102 and/or a display personally associated with a driver or passenger of vehicle 102, such as a smartphone display.

The frontend component 204 is exemplarily illustrated as being in communication with a separate or external PV yield estimator 210, which will be discussed in more detail hereinbelow. The output / presentation component 208 is illustrated as being configured to provide park assist information to a display 213 which may be identical to or different from display 212.

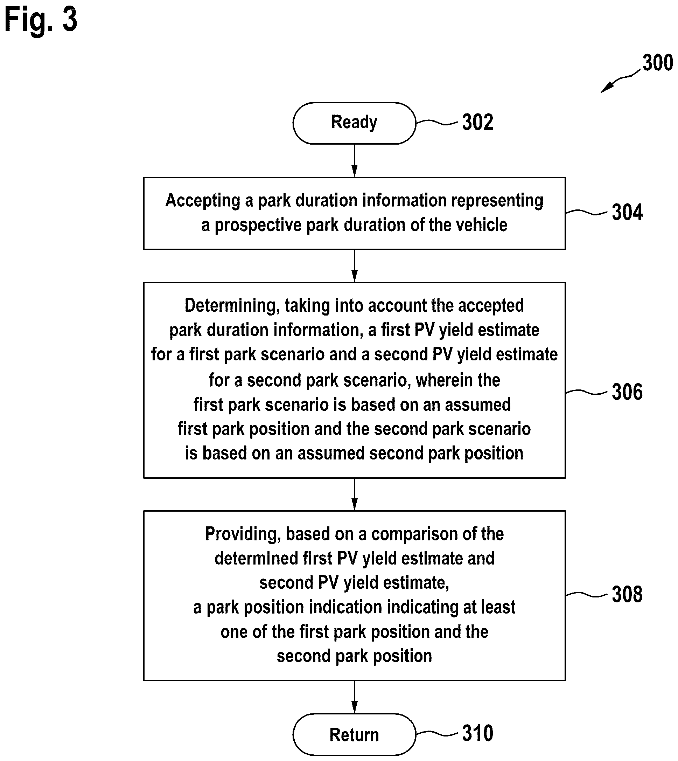

Fig. 3 is a flow diagram illustrating an operation 300 of the park assist module 126. In step 302, the park assist module 126 is in a state of readiness, e.g., during general operation of vehicle 102, the according app is operative on the smartphone 140 of the driver in the background.

In step 304, park duration information representing a prospective park duration of the vehicle is accepted by input component 202. Specifically, the input component 202 may be triggered by the vehicle 102 approaching entrance 105, e.g., an according signal 128 from a sender 130 associated with parking lot 104 may be detected.

In response to reception of signal 128, trigger component 202 may operate to establish a prospective park duration of vehicle 102 at the parking lot 104. Specifically, trigger component 202 may provide for an output of according information to display 212.

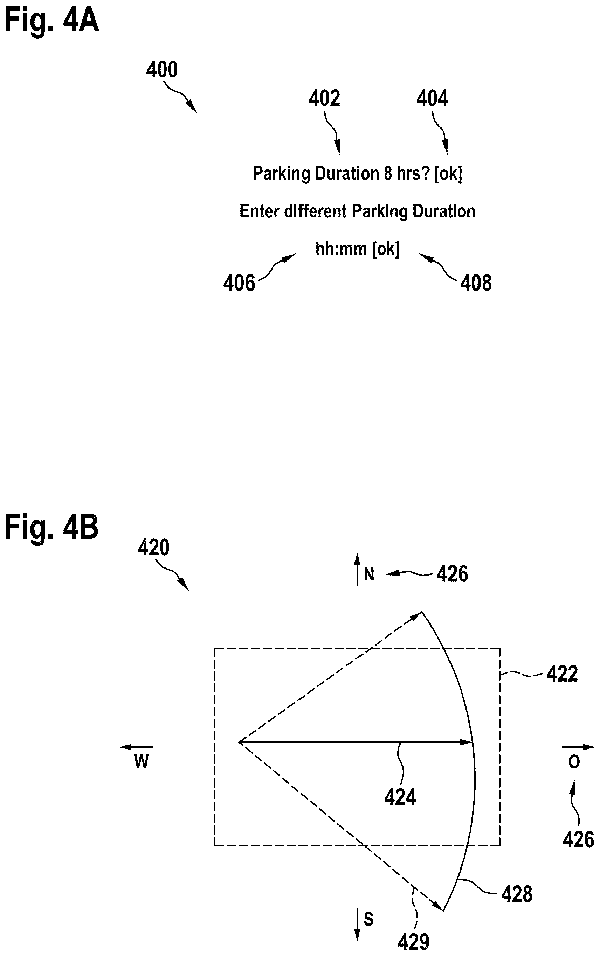

Fig. 4A schematically illustrates an example for such output 400 to display 212. The presentation 400 comprises a proposal 402 for a parking duration, which is presented in letters but may also be accompanied by an according audio output. Proposal 402 may be based on historical data, such as a parking duration at the same parking lot in the past. As a specific example, the driver of vehicle 102 may be employed at a company operating the parking lot 104 and may usually park therein the vehicle during the working day. According to other examples, signal 128 received from the parking lot 104, 130 may indicate one or more typical parking durations for visitors of the lot 104, and there may be different such average parking durations, e.g., for shopping purposes, near governmental facilities, hospitals, etc.

The driver of vehicle 102 may simply acknowledge 404 the proposal 402, for example by pressing an Ok-Button and/or by voice input. Display output 400 also offers an option or options to enter other parking duration 406 and acknowledge with OK 408, if the proposal 402 does not match the intention of the driver. In the example illustrated in Fig. 4A, numerals indicating an intended parking duration in hours and minutes can be entered. Other input options and combinations thereof can readily be contemplated, which may include presenting a menu offering different predefined parking durations to let the driver choose therefrom.

Upon the user pressing ok 404 and thereby indicating consent, the according prospective parking duration is accepted by trigger component 202, and accordingly triggers further operation of park assist module 126.

In step 306 in Fig. 3, the PV yield estimator 210 determines PV yield estimates for different park scenarios. Specifically, trigger component 202 triggers frontend 204 of the PV yield estimator by pushing the prospective parking duration. The frontend component 204 may be implemented as an application programmable interface, API, for the PV yield estimator 210, for example. However, in different embodiments, frontend component 204 and PV yield estimator 210 may also be implemented as one integrated component and/or the PV yield estimator 210 may be integrated within the park assistant module 126 such as being based on an according library providing the functionality of the PV yield estimator 210, for example.

The frontend component 204 initiates operation of the PV yield estimator 210 by providing the required input data. The PV yield estimator 210 is adapted to determine the PV yield for PV integrations of vehicles, which may be achieved based on modeling various influences, defining parameters thereof, etc. Given sets of specific parameter values, the PV yield estimator predicts an amount of solar energy that can be transformed into km [kilometers] for the vehicle. According to embodiments, the PV yield estimator further assists in identifying for the specific vehicle a park position or positions which optimize an amount of solar energy received in a defined future, i.e. the prospective parking duration. According to other embodiments, the PV yield estimator 210 may be specifically adapted to the vehicle 102, for example based on a fixed set or sets of parameter values, and may then be provided as a built-in component of vehicle 102 which can also be used offline, i.e. without any data from remote, a cloud, the Internet, etc. For example, PV yield estimates or intermediate results related thereto may be predefined for a given set of discrete prospective parking durations, weather conditions, etc. Also combinations of these embodiments can be contemplated.

According to more specific embodiments, the PV yield estimator 210 may principally take into account various parameters such as a shape of the vehicle, a performance of the solar integration, a localization of the vehicle, an orientation of the vehicle, etc. Some of these parameters may be predefined by the manufacturer of the vehicle, in particular for a built-in PV yield estimator, while other parameters may change for each call or trigger of the PV yield estimator, and then it is the task of the frontend component 204 to collect and provide the specific data / parameter values.

However, in alternative examples, the PV yield estimator is provided remote and is used for a plurality of different vehicles and/or types of vehicles. Then the frontend component may need to provide the PV yield estimator with all input parameters, including values for the shape of the vehicle and/or performance of the solar integration. For example, the shape of vehicle 102 and performance of solar cell integration 124 thereof may be provided by the trigger component 202, or the frontend component 204 may access an according database 214, such as for example a database containing a specific data record for vehicle 102 and provided onboard the vehicle, remote at / by the manufacturer of the vehicle, at a customer's database of the operator of the PV yield estimator 210 or the parking lot 104, etc.

According to exemplary embodiments it is further assumed that the PV yield estimator 210 is configured to take into account real whether data and/or forecast weather data, such that the PV yield estimator 210 can provide PV yield estimates for, e.g., short, mid-term and/or long-term parking durations. In case the prospective parking duration as indicated by the trigger component 202 is below a given threshold such as, e.g., 1 hour, forecast weather data may not be required and real weather data only may be taken into account by the PV yield estimator 210. For example, an amount of light incident to the PV integration 124 when the vehicle 104 stands at or approaches the entrance 105 of parking lot 104 may be assumed to be representative for a short parking duration.

For parking durations above one or more thresholds, a more comprehensive approach may be as follows. For a retrieval of current and/or forecast weather data the frontend component 204 is, upon being triggered by the trigger component 202 with the push of the prospective parking duration, configured to access a weather database 216 to retrieve weather data for location data associated with the parking lot 104 or vehicle 102. Such location data may have been transmitted by trigger component 202 together with the prospective parking duration from the smartphone of the driver, or location data for the parking lot 104 may have been provided from sender 130 of parking lot 104, or location data may be provided, e.g. requested and received from a location sensor such as a global positioning system, GPS, sensor associated with vehicle 102 or the smartphone 140 of the driver. Based on the accordingly retrieved forecast data for the location of the parking lot 104 / the vehicle 102, the PV yield estimator may then calculate a total amount of solar energy impinging on the PV integration 124 of vehicle 102.

Data specific to the local environment of the parking places 106, 108, 109 may also be taken into account when estimating the specific PV yields for said parking places. For example, as indicated in Fig. 1, when the vehicle 102 approaches the parking lot 104 at the time of the shadow line 122, the parking places 106 and 109 are sunny, while parking place 108 is partly shaded by building 110. For a short parking duration this scenario may essentially not change, while for a longer parking duration, also parking place 108 will become sunny again. In more complex scenarios, when the vehicle 102 approaches the parking lot 104 at the time of the shadow line 116, all parking places are currently sunny, while parking place 106 will soon be shaded, which will go on for some time depending on the distance to building 110, and will then become sunny again, while the similar scenario will happen to parking place 109, albeit at later times. Parking place will also become shaded, and this will take a longer time to said parking place being nearby to building 110.

In order to be able to consider local shading scenarios such as above, frontend component 204 may request imaging data from a camera or cameras, if available, associated with the vehicle, such as a dashcam, or associated with a passenger of the vehicle, such as a camera of the smartphone 140 of the driver. For example, the driver's smartphone 140 may be placed in a fixture in the vehicle and being able to image an area in front of the vehicle and may provide such image via a communication connection with the vehicle. Sender 130 of parking lot 104 may also provide imaging data and/or other information relevant for the PV yield estimator to take into account the local shading conditions. The PV yield estimator may use the imaging data to calculate the local shading conditions for each parking place under consideration and/or for calculating the amount of light impinging on the PV integration of the vehicle based on said local shading conditions.

The PV yield estimator 210 may specifically calculate PV yield estimates for park positions which differ from each other in an orientation of the vehicle 102. This is illustrated in Fig. 1 by different assumed parking orientations 132, 134 illustrated on one and the same parking position 106, or different parking orientations 136, 138 at different parking positions 108, 109. It is to be understood that the differences in PV yields for different orientations may depend on the shape of the vehicle and/or the extent of the PV integration 124 at, e.g., roof and sides of the vehicle 102.

The orientations may be expressed with reference to celestial directions such that, for example, the orientations 132, 136 are oriented in a north-south direction and the orientations 134, 138 are oriented in an "east-west direction". Use of more detailed reference systems such as a compass system having degrees between 0°-360° is also contemplated. While in Fig. 1 purely for ease of understanding the orientations 132, 134 are illustrated as being perpendicular to the orientation 134, 38, this may not generally be the case and the PV yield estimator may perform calculations for many orientations which differ by less than 90°, for example, 45°, 30°, 10°, or less. As a specific example, the PV yield estimator may implement methods of interval nesting for approaching an optimal orientation / range for optimized PV yields.

According to other embodiments, the orientations considered by the PV yield estimator may also be restricted, for example upon the parking lot 104 only providing parking spaces oriented into a limited number of directions, or the available free parking spaces for the vehicle 102 are such limited. Still then, the PV yield estimates for the different parking spaces, i.e., different localizations on the parking lot 104, may differ due to local shading.

Referring again to Fig. 3, in step 308 the PV yield estimator 210 provides a park position indication indicating at least one park position. In the example configuration illustrated in Fig. 2, the PV yield estimator 210 may return one or more parking positions and/or parking orientations to frontend 204, which may provide the estimates to the ranking component 206. It is to be understood that the functionality of the ranking component 206 may also be included in the PV yield estimator 210 and/or the frontend component 204.

The ranking component 206 operates to rank the received PV yield estimates. Such ranking may be based on the yields, such that parking orientations and/or according parking positions with highest yields are ranked preferable, while others are ranked less preferable. According to one illustrative example, in the scenarios of Fig. 1 the parking position 106 with parking orientation 132 and the parking position 108 with orientation 132 may be ranked preferable for a PV yield representing the maximum PV yield from all calculated, while the parking position 106 with parking orientation 134 and parking position 109 with orientation 138 may be ranked less preferable due to lower estimated PV yields.

It is to be understood that ranking results may differ depending on parking duration. For example, a short prospective parking duration and a current sun position may lead to different results than a long prospective parking duration and the according path of the sun. For example, while in case of a short parking duration, parking the vehicle along its main direction pointing towards the sun may be less preferable than parking the vehicle with one of its sides having a PV integration towards the sun, for a long parking duration an optimum direction may be difficult to predict by the driver; for example, sunlight may be sequentially incident on both sides of the vehicle and an optimal parking direction of the vehicle may be orienting the vehicle towards the current sun position, towards south, or into still another direction.

In a simple example, the ranking may be based on maximizing the PV yield estimate as a single ranking criterion of. It is however to be understood that additional ranking criteria may be considered. For example, in case of same or similar PV yield estimates or the PV yield estimates being within predefined ranges, parking places / orientations may be ranked preferable according to availability of a grid 131 for connecting thereto for purposes such as charging vehicle 102 or providing power to the grid 131 / consumers connected thereto. Still further ranking criteria include that parking places may be ranked preferable which are comfortable for the driver to reach or park in, e.g., near to entrance 105, near to entrances / exits for the vehicle passengers leaving or approaching their parked vehicles, such as passengers of busses, etc. Also the operator of the parking lot may provide for strategies of using or managing the parking lot and this may also be included in the parking places / orientations recommended to the driver.

Step 308 may further comprise the frontend 204 and/or ranking component 206 providing a result of the ranking to output / presentation component 208 of park assistant module 126. The output component 208 may provide an according indication for output to a display 213, which may be a built-in display in the vehicle 102 and/or a display of a personal / mobile or portable device of a passenger of vehicle 102. According to another example, the output component 208 may be configured to additionally or alternatively provide an indication of a preferable parking position and/or orientation to an autonomous parking module of a driving / parking assistant of vehicle 102 configured for autonomously parking the vehicle at the indicated parking position / orientation.

It is generally to be understood that the ranking results provided by ranking component 206 may further be operated on by output / presentation component 208. For example, the presentation component 208 may present all or only part of the ranking results to display 213 depending on the capacities thereof in terms of size, response capabilities, etc. For example, depending on feedback available for the driver, such as touch-feedback provided or not on a built-in display or smartphone display, and/or audio feedback etc., only one parking place may be offered, or several parking places may be offered from which the driver may be select according to personal preferences. This in mind, the following examples may be prepared for presentation by the ranking component 206, presentation component 208, or both.

According to one example, only the highest ranked parking position / orientation may be presented, e.g., a most preferred orientation of the vehicle 102 for parking during the indicated prospective parking duration. As another example, the most preferred specific parking place may be indicated, e.g., on a map representing the parking lot 104. As a still another example, only the most preferred currently available parking place may be indicated as according to a control / monitoring system of the parking lot 104, an app, etc. which enables monitoring the available parking places, such that only such places may be considered for the PV yield estimation of the park assistant 126.

Fig. 4B illustrates an example embodiment of a presentation or output 420 to display 213. A graphical icon or representation 422 of vehicle 102 is presented together with further symbolic representation intended to support the driver in parking the vehicle 102 in a preferred orientation as estimated by parking assistant 126 for achieving an optimized PV yield. Specifically, icon 422 may indicate a main direction or forward / backward travel direction of vehicle 102, and a forward travel direction may additionally or alternatively be indicated by an arrow 424. Compass symbols 426 indicating celestial or cardinal directions "N", "S", E", W" may also be presented to help the driver imagining the optimum recommended parking direction.

Moreover, instead of only a single parking direction 424, a range 428, 429 of orientations may be indicated, and the relative orientations of the various symbols 422, 424, 426, 428 and 429 may adapt according to variations of vehicle's orientation during manoeuvre. As one example, the relative orientation of icon 422 towards one or more symbols 426 may be automatically adjusted when the vehicle moves in the parking, approaches a preferred location or specific parking place. Such adjustment may be based on calculations of the driving path and/or movements of the steering wheel of vehicle 102 as sensed from, e.g., the entrance 128, or based on a compass function of the vehicle or personal device associated with display 213, combinations thereof, etc.

Any such symbols as indicated in Fig. 4B may also be projected onto a map of parking lot 104 to support the driver in approaching the recommended parking place or position.

According to various embodiments, the ranking component 206 may be configured to perform further calculations based on the PV yields provided by estimator 210. For example, taking into account the energy estimated to be available from the solar integration during the prospected parking duration, the energy taken from a charging station at parking lot 104 may be optimized. According to one example, it may be determined whether a charging of the vehicle is required at all, taking into account an energy that the vehicle may need after leaving the parking place or lot, for example for travelling home from the employer's parking lot. Any such energy demand may be predicted and presented for acknowledgement to the driver in a way similar as discussed and describe above with reference to Fig. 4A. Any such acknowledgement may also take place prior to any recommendation of particular parking places / orientations, for example according to the requirement or not of a parking place providing access to a charging station.

Recommendations of preferable parking positions and/or orientations may comprise a calculation of which parking place may allow sufficient charging during the prospected parking duration and/or may allow provisioning of energy from the vehicle to the grid 131. For example, such energy or power provisioning may be optimized according to electricity tariffs, such as feeding energy into the grid when prices are high.

According to still further examples, a power consumption control component 218 may control a power provisioning including a battery charging from the PV integration 124 and/or a power grid and including a feeding or injecting of energy or power to the grid from the battery and/or the PV integration 124 according to energy or load level of the battery, energy available from the PV integration 124, etc. during the prospective parking duration. For example, in case of a load level satisfying an energy demand for the vehicle's drive after leaving the parking lot, energy provided by the PV integration may be provided to the grid and/or other consumers.

In order to enable sophisticated power consumption control or power provisioning management, parking places / orientations that allow access to a power grid, charging station, etc. may be ranked preferable, even if a charging of the vehicle is not required according to the PV yield estimates during the prospective parking duration.

In step 310 the park assistant module returns control to a main control of vehicle 102, e.g., because the vehicle 102 is successfully parked in a recommended orientation / parking position.

Nevertheless, during parking data may be sensed, such as the factual parking duration for comparison to the prospective parking duration for improved recommendations of prospective parking durations in the future, the factual PV yield for comparison to the estimated PV yield, etc.

Embodiments of the present disclosure provide a park assist method and module which may operate stand-alone or as a complement or improvement to existing passive or active parking assistance approaches. In particular for vehicles with PV integration, embodiments discussed herein can optimize a PV yield of the solar integration and thereby minimize amounts of power or energy which have to be supplied (and bought), for example, by charging from a grid such as a grid provided by a public supplier, an operator of the parking lot, such as an employer of the driver, a shopping mall, restaurant, tourist destination, etc. This contributes to reducing the running costs of the vehicle. Instead, energy may be provided to others.

It is already difficult to imagine purely by mind to what extent a side or sides of the vehicle will see direct sunlight during a longer parking time of several hours, where the sun cannot be assumed to stand still. Still more complex the situation is in case a limited amount of parking places is available, where none of these offer an optimum orientation. Park assist embodiments as discussed herein are required already for these "simple" cases to optimize an amount of energy available via the solar integration of the vehicle.

Taking further into account local shadowing conditions, again in particular for longer parking durations of, e.g., more than one hour, it is to be noted that it is not normally an easy task for a driver to estimate purely by mind a PV yield for the vehicle during parking even when the parking place, a general performance of the vehicle's PV integration, etc. is known. For a "long" parking duration where the sun cannot be considered to stand still, the direction of the light impinging onto the vehicle changes and so do shading conditions as resulting from potentially shading objects at various distances, with different sizes, appearances, etc., where also shadows may overlap at the position of the parked vehicle.

Additionally or alternatively, varying weather conditions add to complexity of the prediction, where in particular for medium and long parking durations it may be difficult to know in advance the time spans when the sun is shining, which may depend on when clouds come and/or go, and it is therefore also complex to know whether any shading of the parked vehicle by nearby objects is at all relevant due to the sun anyway being obscured by clouds, etc. Embodiments discussed herein which take into account current and future weather data enable a more accurate PV yield estimate depending on the accuracy of the forecast.

Embodiments described herein assist the driver of the vehicle in finding an optimized parking place / orientation with a minimum of extra efforts. For example, the driver may simply acknowledge a proposal or proposals of the assistant, for example for a prospective parking duration, an energy demand, e.g., in terms of distance to be travelled after parking, a particular parking place to be guided or driven to, etc. In case of the assistant's proposals being presented sufficiently early, e.g., when the vehicle approaches the parking lot, absence of driver's instructions otherwise may even be taken as acknowledgement.

While the invention has been described in relation to its preferred embodiments, it is to be understood that this description is intended non-limiting and for illustrative purposes only. In particular, various combinations of features wherein the features have been described separately hereinbefore are apparent as advantageous or appropriate to the skilled artisan. Accordingly, it is intended that the invention be limited only by the scope of the claims appended hereto.

### LIST OF REFERENCE SIGNS

- 100: Parking scenario
- 102: Vehicle
- 104: Parking lot
- 105: Entrance
- 106, 108, 109: Parking places
- 110: Building
- 112: Sun
- 114: Shadow
- 116: Shadow line
- 120: Shadow
- 122: Shadow line
- 124: PV integration
- 126: Park assist module
- 128: Signal
- 130: Sender
- 131: Power grid
- 132, 134, 136, 138: Orientations
- 202: Trigger component
- 204: Frontend component
- 206: Ranking component
- 208: Output component
- 210: PV yield estimator
- 212, 213: Display
- 214, 216: Database
- 218: Power provisioning control module
- 300: Method
- 302-310: Method steps
- 400: Presentation
- 402: Proposal
- 404: Acknowledgement
- 406: Proposal
- 408: Acknowledgement
- 420: Presentation
- 422: Vehicle icon
- 424: Direction icon
- 426: Celestial direction indications
- 428, 429: Range indications

## Claims

1. A park assist method for a vehicle having photovoltaics, PV, at a vehicle body, comprising:
accepting (304) a park duration information representing a prospective park duration of the vehicle (102);
determining (306), by a PV yield estimator (210), taking into account the accepted park duration information, a first PV yield estimate for a first park scenario and a second PV yield estimate for a second park scenario, wherein the first park scenario is based on an assumed first park position (132, 136), the second park scenario is based on an assumed second park position (134, 138), and wherein the first park position and the second park position differ from each other; and
providing (308), based on a comparison of the determined first PV yield estimate and second PV yield estimate, a park position indication (420) indicating at least one of the first park position and the second park position.

2. The park assist method according to claim 1,
wherein the first park position and the second park position differ from each other in at least one of an orientation (132, 134) of the vehicle (102) and a localization of the vehicle (108, 109).

3. The park assist method according to claim 1 or 2,
wherein accepting the park duration information comprises accepting a passenger input of a passenger of the vehicle (102) related to the prospective park duration.

4. The park assist method according to claim 3,
wherein accepting the park duration information comprises:
presenting a duration proposal (402) for the prospective park duration, and
accepting the passenger input (404, 408) in response to presenting the duration proposal (402).

5. The park assist method according to any one of the preceding claims,
wherein determining the first and second PV yield estimates is based on at least one of a shape of the vehicle and a performance of solar cell integration (124) of the vehicle.

6. The park assist method according to any one of the preceding claims,
wherein determining the first and second PV yield estimates is based on weather data related to the location of the vehicle (102).

7. The park assist method according to claim 6,
wherein the weather data include at least one of real-time weather data and forecast weather data.

8. The park assist method according to any one of the preceding claims,
wherein determining the first and second PV yield estimates includes accepting imaging data from a camera (140) associated with the vehicle or a passenger of the vehicle.

9. The park assist method according to any one of the preceding claims,
wherein the park position indication comprises at least one of an indication of an orientation (424) of the vehicle and an indication of a currently available park position.

10. The park assist method according to any one of the preceding claims, further comprising: determining a charging energy of a charging station based on the first and/or second PV yield estimate.

11. The park assist method according to any one of the preceding claims, further comprising:
accepting an energy demand indication indicating an energy demand of the vehicle (102) after the prospective park duration, and
receiving energy from the charging station (131) and/or providing energy to a consumer (feeding energy into a grid) based on the energy demand indication.

12. A computer program comprising program code portions for at least one of performing and controlling the method of any one of the preceding claims when the computer program is executed on one or more computing devices.

13. A computer readable medium storing the computer program according to the preceding claim.

14. A park assist module for a vehicle having photovoltaics, PV, at a vehicle body, comprising:
a component (202) configured for accepting a park duration information representing a prospective park duration of the vehicle;
a PV yield estimator (210) configured for determining, taking into account the accepted park duration information, a first PV yield estimate for a first park scenario and a second PV yield estimate for a second parking scenario, wherein the first park scenario is based on an assumed first park position, the second park scenario is based on an assumed second parking position, and wherein the first park position and the second park position differ from each other; and
a component (208) configured for providing, based on a comparison of the determined first PV yield estimate and second PV yield estimate, a park position indication indicating at least one of the first park position and the second park position.
